# EUROPÄISCHE PATENTANMELDUNG

(11) **EP 0 532 114 A1**
(43) Veröffentlichungstag der Anmeldung: **17.03.1993**
(21) Anmeldenummer: 92202734.7
(22) Anmeldetag: 09.09.1992
(51) Int. Cl.: C04B 35/46, C04B 35/00

(54) **Verfahren zur Herstellung wässeriger keramischer Suspensionen und Verwendung dieser Suspensionen**

(30) Priorität: 13.09.1991 DE 4130441
(71) Anmelder: Philips Patentverwaltung GmbH, 22335 Hamburg (DE); Philips Electronics N.V., 5621 BA Eindhoven (NL)
(72) Erfinder: Lauter, Josef, c/o Philips Patentverwaltung GmbH, W-2000 Hamburg 1 (DE); Mayr, Walter, c/o Philips Patentverwaltung GmbH, W-2000 Hamburg 1 (DE); Optitz, Joachim, Dr., c/o Philips Patent GmbH, W-2000 Hamburg 1 (DE); Romanowski, Gerd, Dr., c/o Philips Patent GmbH, W-2000 Hamburg 1 (DE)
(74) Vertreter: Volmer, Georg, Dipl.-Ing.

(57) **Zusammenfassung**

Verfahren zur Herstellung und Verwendung von wässerigen Suspensionen, die feinteilige pulverförmige keramische Feststoffpartikel, Dispergierhilfsmittel und gegebenenfalls Bindemittel enthalten, wobei bei der Herstellung der Suspensionen folgende Verfahrensschritte einzeln oder in Kombination durchgeführt werden:
- Waschen der Feststoffpartikel in Wasser vor Aufbereitung der Suspension;
- Zusatz von anionischen Verbindungen in Form von Sulfaten, Carbonaten, Jodaten, Chromaten, Oxalaten, Citraten und/oder Tartraten;
- Herstellung der Suspensionen und/oder Lagerung der fertigen Suspensionen unter einer CO₂-freien Gasatmosphäre;- Herstellung der Suspensionen und Lagerung der fertigen Suspensionen bei einer Temperatur unterhalb 20 °C, vorzugsweise unterhalb 15 °C;
- Zusetzen von zusätzlichem Dispergierhilfsmittel zur Suspension zu einem Zeitpunkt, bei dem Reagglomeration der Feststoffpartikel in der Suspension gerade noch nicht oder gerade eingesetzt hat.

## Beschreibung

Die Erfindung betrifft ein Verfahren zur Herstellung von wässerigen Suspensionen, die feinteilige pulverförmige keramische Feststoffpartikel, Dispergierhilfsmittel und gegebenenfalls Bindemittel enthalten.

Die Erfindung betrifft weiter die Verwendung derartiger Suspensionen.

Suspensionen, die aus pulverförmigem keramischem Material, einem Lösungsmittel oder Lösungsmittelgemisch, einem oder mehreren organischen polymeren Bindemitteln, Weichmachern und Dispergierhilfsmitteln bestehen, werden z.B. zum Gießen dünner keramischer Grünfolien verwendet, die nach dem Trocknen zu elektronischen Bauelementen, wie z.B. keramischen Vielschichtkondensatoren, weiterverarbeitet werden.

Von besonderem Interesse als keramisches Material ist Bariumtitanat, das wegen seiner hohen Dielektrizitätskonstante zur Herstellung keramischer Vielschichtkondensatoren eingesetzt wird. Dabei werden vor allem organische Lösungsmittelsysteme eingesetzt, in denen das keramische Pulver dispergiert wird und zusammen mit organischen polymeren Bindern, Weichmachern und Dispergierhilfsmitteln den Foliengießschlicker bildet. Wässerige Suspensionen aus feinstteiligem Bariumtitanat mit Partikelgrößen von unterhalb 0,5 µm, vorzugsweise 0,1 bis 0,2 µm, sind zum Gießen dünner Folien einer Dicke > 2 µm mit verbesserter Homogenität und Festigkeit erforderlich.

Es ist jedoch nicht allein die mittlere Größe und die Größenverteilung der Feststoffprimärpartikel des keramischen Materials für den gleichmäßigen, störungsfreien Aufbau der Grünfolien wichtig, sondern auch der Agglomerationszustand der Feststoffpartikel in der Suspension. So setzt sich immer mehr die Erkenntnis durch, daß homogene, dicht gepackte Grünfolien nur erhalten werden können, wenn die Feststoffpartikel in der Suspension als vollständig deagglomerierte, separate Primärpartikel vorliegen, da Partikelagglomerate und -aggregate das Auftreten von größeren Hohlräumen, Lunkern, Löchern und Einschlüssen bewirken, die die Homogenität und Festigkeit der Folien verschlechtern.

Das vollständige Deagglomerieren der Pulverpartikel ist insbesondere bei der Herstellung sehr dünner Folien von großer Wichtigkeit, da sich in diesem Fall die genannten auf Partikelagglomerate zurückzuführenden Defekte besonders nachteilig auf die Folieneingeschaften auswirken. Der Grund hierfür ist die mit abnehmender Foliendicke zunehmende, auf die Foliendicke bezogene relative Abmessung des jeweiligen Defektes. Dies bewirkt eine Verschlechterung der Folienhomogenität und der Folienfestigkeit.

Zusätzlich ist insbesondere bei der Verwendung feinstteiliger Materialien einer mittleren Partikelgröße von < 0,5 µm die vollständige Deagglomeration der Partikel besonders schwierig, weil aufgrund der kleinen Partikeldurchmesser und der großen Oberflächen besonders starke anziehende Wechselwirkungen zwischen den Partikeln auftreten.

Eine Deagglomeration feinstteiliger Feststoffpartikel in wässeriger Suspension kann mit Hilfe von Ultraschalleinwirkung auf die Suspension erreicht werden, wie es z.B. aus JP 62-169480 bekannt ist.

Eine genaue Untersuchung derartiger bekannter Suspensionen zeigt nun aber, daß dieser ideal deagglomerierte Zustand nicht beliebig lange stabil ist. Die Suspensionen werden nach einer gewissen Zeit, die stark vom Feststoffgehalt der Suspension und von der Konzentration des polymeren organischen Bindemittels abhängt und etwa zwischen 0 min und 4 h liegt, instabil, d.h. die partikel beginnen, Agglomerate zu bilden.
Die unerwünschte Reagglomeration der separat vorliegenden Primärpartikel wird allerdings durch geeignete Dispergierhilfsmittel verzögert. Dispergierhilfsmittel bewirken eine den zwischen den Partikeln wirkenden Anziehungskräften entgegengerichtete Abstoßung der Partikel. Es ist bekannt, daß sich in wässerigen Systemen besonders gut Polylelektrolyte, insbesondere solche mit einem Polymerisationsgrad von 20 bis 100, für diesen Zweck eignen. Solche Dispergierhilfsmittel werden an der Oberfläche der Partikel adsorbiert und führen dort wegen ihrer zahlreichen geladenen funktionellen Gruppen, wie z.B. -COO⁻ oder -NH₃⁺ zu einer Aufladung der Partikeloberfläche. Die dann gleichnamig geladenen Partikel stoßen sich elektrostatisch ab. In der Regel sind diese elektrostatischen Abstoßungskräfte weitaus größer als die auf dispersive van der Waals-Kräfte zurückzuführenden anziehenden Wechselwirkungen.

Das genannte instabile Verhalten der für die Folienherstellung verwendeten Suspensionen ist für die praktische, industrielle Anwendung des Verfahrens von erheblichem Nachteil.

Da die Anwesenheit von Partikelagglomeraten die Eigenschaften der Folie verschlechtert, müssten die Gießschlicker vor Beginn der Agglomeration verarbeitet werden. Dies hätte bei charakteristischen Stabilitätszeiten von 0 min bis 4 h erhebliche Einschränkungen für die Arbeitsabläufe bei der Produktion zur Folge. Außerdem müssten die hergestellten Suspensionsmengen so bemessen sein, daß sie innerhalb von 0 min bis 4 h vollständig zu Folien verarbeitet werden könnten, um konstante Folieneigenschaften während des Gießvorganges sicherzustellen. Ein solches Vorgehen wäre jedoch sehr unwirtschaftlich und würde außerdem zu einer Verschlechterung der Reproduzierbarkeit der einzelnen viel zu kleinen Suspensionsansätze führen.

Das bedeutet, daß die verwendeten Suspensionen mindestens über einen Zeitraum von 15 bis 25 h stabil sein müssen. Rechnet man weitere Zeitverluste durch die notwendige zeitliche Koordination verschiedener Prozeßschritte hinzu, ist ein Zeitraum von etwa 40 h, über den die Suspensionen keine Veränderung ihres Agglomerationszustandes zeigen sollten, wünschenswert.

Der Erfindung liegt die Aufgabe zugrunde, die Langzeitstabilität wässeriger Suspensionen mit feinteiligen Feststoffpartikeln, Dispergierhilfsmittel und gegebenenfalls polymeren organischen Bindern und gegebenenfalls Weichmachern so zu verbessern, daß die Reagglomeration der Primärpartikel verhindert wird.

Diese Aufgabe wird erfindungsgemäß dadurch gelöst, daß bei der Herstellung der Suspensionen folgende Verfahrensschritte einzeln oder in Kombination durchgeführt werden:
- Waschen der Feststoffpartikel in Wasser vor Aufbereitung der Suspension;
- Zusatz von anionischen Verbindungen, insbesondere in Form von Sulfaten, Carbonaten, Jodaten, Chromaten, Oxalaten, Citraten und/oder Tartraten;
- Herstellung der Suspensionen und/oder Lagerung der fertigen Suspensionen unter einer CO₂-freien Gasatmosphäre;
- Herstellung der Suspensionen und Lagerung der fertigen Suspensionen bei einer Temperatur unterhalb 20 °C, vorzugsweise unterhalb 15 °C;
- Zusetzen von zusätzlichem Dispergierhilfsmittel zur Suspension zu einem Zeitpunkt, bei dem Reagglomeration der Feststoffpartikel in der Suspension gerade noch nicht oder gerade eingesetzt hat.

Es hat sich überraschenderweise gezeigt, daß die Langzeitstabilität wässeriger Suspensionen der eingangs genannten Art durch eine Reihe ganz unterschiedlicher Maßnahmen verbessert werden kann. Diese Maßnahmen beruhen entweder auf einer Modifikation der chemischen Zusammensetzung der Suspension durch Zugabe oder Ausschluß bestimmter Substanzen oder durch Veränderung physikalischer Bedingungen, unter denen die Suspensionen hergestellt oder aufbewahrt werden.

Die Kühlung der Suspensionen auf Temperaturen unterhalb 20 °C, vorzugsweise unterhalb 15 °C, bewirkt eine Verzögerung des Reagglomerationsprozesses. Dadurch wird die Stabilität der Suspensionen beträchtlich verbessert.

Eine ebenfalls wirksame Maßnahme besteht darin, die Feststoffpartikel vor der Präparation der Suspensionen gründlich zu waschen. Dazu wird das pulverförmige Ausgangsmaterial in Wasser dispergiert und für längere Zeit stehengelassen. Der Feststoffanteil wird nun durch Filtration oder Zentrifugation von der flüssigen Phase abgetrennt und gründlich mit Wasser gewaschen. Mit diesen gewaschenen Feststoffpartikeln hergestellte Suspensionen und Schlicker zeigen eine erheblich verbesserte Langzeitstabilität.

Eine weitere wirksame Maßnahme zur Stabilisierung der Suspensionen besteht im Ausschluß von in der Atmosphäre befindlichem Kohlendioxid. Dies kann z.B. durch ständige Spülung der dicht verschlossenen Gefäße und Geräte (Mühlen etc.), die zur Herstellung und Lagerung der Suspensionen verwendet werden, mit einem CO₂-freien Inertgas, wie z.B. Argon oder Stickstoff, erfolgen. Ein solches Vorgehen verzögert das Einsetzen der Reagglomeration beträchtlich.

Ebenfalls zur Verbesserung der Langzeitstabilität geeignet ist das Nachdosieren des als Dispergierhilfsmittel wirkenden Polyelektrolyten kurz vor dem Einsetzen der Reagglomeration oder, bevorzugt, nach Beginn der Reagglomeration der Feststoffpartikel. Besonders interessant hierbei ist, daß auch bereits gebildete Agglomerate wieder zerstört werden, ohne daß erneut mechanische Energie, z.B. durch Mahlen oder Ultraschallbehandlung, zugeführt werden muß. Letzteres Verhalten ist besonders interessant, da es die Möglichkeit bietet, durch Reagglomeration unbrauchbar ge-wordene Suspensionen durch eine einfache Maßnahme, dem Nachdosieren von Dispergierhilfsmittel, wieder verwendbar zu machen.

Die optimale Menge des nachdosierten Dispergierhilfsmittels liegt nach einer vorteilhaften Weiterbildung des erfindungsgemäßen Verfahrens zwischen dem 0,5- und 2-Fachen der der Suspension bei der Herstellung zugesetzten Dispergierhilfsmittelmenge.

Besonders wirksam zur Verbesserung der Langzeitstabilität ist die Zugabe von Verbindungen, die bestimmte Anionen enthalten. Solche Anionen sind z.B. Sulfat SO₄²⁻, Carbonat CO₃²⁻, Jodat JO₃⁻, Chromat CrO₄²⁻ und Fluorid F⁻⁴. Besonders vorteilhaft ist die Verwendung organischer Anionen, die den Vorteil haben, bei einem späteren Ausbrennschritt als flüchtige Zersetzungsprodukte rückstandslos entfernt werden zu können. Solche Anionen, die eine stabilisierende Wirkung haben, sind z.B. Oxalat, Citrat, Tartrat.

Nach einer besonders vorteilhaften Ausgestaltung des erfindungsgemäßen Verfahrens werden die genannten anionischen Verbindungen in Form ihrer Ammoniumsalze zugesetzt; in diesem Fall kann im Gegensatz zu Metallsalzen auch die kationische Komponente rückstandslos ausgebrannt werden.

Die Reihenfolge der Zugabe von Feststoff, Lösungsmittel, Dispergierhilfsmittel und anionischem Zusatz zur Suspensionsherstellung ist beliebig. Als besonders vorteilhaft hat es sich allerdings erwiesen, die anionische Verbindung mit dem Lösungsmittel Wasser vorzulegen und anschließend die Feststoffpartikel in dieser Lösung zu dispergieren, bevor schließlich das Dispergierhilfsmittel zugefügt wird.

Die Konzentration des anionischen Zusatzes ist nicht beliebig. Eine zu geringe Konzentration führt nicht zum gewünschten Ergebnis, d. h., die Reagglomeration wird nicht wirkungsvoll verzögert. Auf der anderen Seite vermindert dagegen ein Überschuß der anionischen Verbindung die kolloidchemische Stabilität der Feststoffpartikel, insbesondere des Bariumtitanats, durch Beeinflussung der für die Abstoßungskräfte zwischen den Partikeln wichtigen elektrischen Doppelschicht. Die optimale Menge des anionischen Zusatzes liegt für die meisten feinteiligen Feststoffpulver zwischen 0,1 und 1,5 Mol%, bezogen auf den Feststoffgehalt.

Besondere Vorteile bietet der kombinierte Einsatz mehrerer der genannten Verfahrensschritte.

So kann beispielsweise das Kühlen auf eine Temperatur von vorzugsweise 15 °C mit dem Ausschluß von CO₂ kombiniert werden. Tatsächlich läßt sich nachweisen, daß die gewünschte Verbesserung der Langzeitstabilität bei der Kombination beider Maßnahmen verstärkt wird. Besonders effektiv ist die gleichzeitige Anwendung anionischer Zusätze, z.B. Oxalat, CO₂-Ausschluß und Kühlung. Ein Vorwaschen der Feststoffpartikel verstärkt die kombinierte Anwendung von Kühlung und CO₂-Ausschluß.

Vorteilhaft ist die Verwendung erfindungsgemäß stabilisierter Schlicker für die Herstellung dünner keramischer Folien mit Dicken unter 25 µm, die durch Vergießen und Trocknen erhalten werden.

Darüber hinaus ist es besonders vorteilhaft, elektronische Bauelemente oder Substrate durch Weiterverarbeitung von Grünfolien aus erfindungsgemäß stabilisierten Schlickern, insbesondere Stapeln zu Vielschichtstrukturen und Brennen zu dichten Körpern, herzustellen.

Überraschend wurde gefunden, daß alle genannten Maßnahmen zur Verbesserung der Langzeitstabilität die Konzentration freier Ba²⁺-Ionen in der wässerigen Phase deutlich reduzieren, d.h. die in wässeriger Suspension von BaTiO₃ auftretende Auslaugung von Barium wird zurückgedrängt.

Im folgenden werden Ausführungsbeispiele der Erfindung beschrieben, und die Erfindung wird in ihrer Wirkungsweise erläutert.

### Beispiel 1

121,5 g feinstteiliges BaTiO₃ einer mittleren Teilchengröße von 190 nm werden zusammen mit 0,73 g Ammoniumpolyacrylat in 79,2 g H₂O dispergiert. Die Suspension wird über eine Dauer von 35 min in einem Ultraschallbad bei einer Frequenz von 20 kHz behandelt. Anschließend wird die Suspension in einer Attritormühle bei 500 Upm gemahlen.

Eine solche Suspension wurde hinsichtlich der mittleren Partikelgröße des in ihr enthaltenden Feststoffes untersucht. Unmittelbar nach der Herstellung wurde eine mittlere Partikelgröße von 190 nm entsprechend der mittleren Partikelgröße der Primärpartikel des verwendeten Pulvers gemessen. Nach einer Dauer von 70 min begann das Material zu reagglomerieren. Nach einer Dauer von 2 h betrug die mittlere Partikelgröße 550 nm.

### Beispiel 1.1

Eine gemäß Beispiel 1 hergestellte Suspension wird während der Herstellung und anschließend auf eine Temperatur von 15 °C gekühlt. Die Reagglomeration setzt erst nach 235 min ein.

### Beispiel 1.2

Eine gemäß Beispiel 1 präparierte Suspension wird während der Herstellung und anschließend einer CO₂-freien N₂-Atmosphäre ausgesetzt. Der stabile Zustand bleibt für 49 h (gegenüber 70 min gemäß Beispiel 1) erhalten.

### Beispiel 1.3

Eine gemäß Beispiel 1 hergestellte Suspension wird solange stehen gelassen, bis durch Agglomeratbildung die mittlere Partikelgröße auf 500 nm angewachsen ist. Zu dieser instabilen Suspension werden erneut 0,73 g Ammoniumpolyacrylat unter leichtem Rühren zugegeben. Danach nimmt die mittlere Partikelgröße schnell ab und erreicht nach etwa 5 min Dauer wieder 190 nm. Die Suspension ist jetzt für 8 h stabil.

### Beispiel 1.4

200 g feinstteiliges Bariumtitanat einer mittleren Partikelgröße von 190 nm werden in 200 g H₂O dispergiert. Die Suspension wird unter Rühren über eine Dauer von 30 h stehengelassen. Anschließend wird der Feststoff abzentrifugiert und die flüssige Phase entfernt. Das Sediment wird erneut mit 200 g H₂O aufgenommen und nach kurzem Aufrühren abzentrifugiert. Dieser Waschvorgang wird 4 x wiederholt.

Das gewaschene Material wird, wie gemäß Beispiel 1, zur Herstellung einer Suspension verwendet. Die mittlere Partikelgröße wird direkt nach der Herstellung mit 192 nm bestimmt. Eine Reagglomeration setzt erst nach 6 h ein.

### Beispiel 1.5

Eine Suspension wird, wie in Beispiel 1 beschrieben, hergestellt.

Dem verwendeten H₂O werden aber vor der Dispergierung des BaTiO₃ 0,365 g Ammoniumoxalat-Monohydrat (NH₄)₂C₂O₄·H₂O zugesetzt und gelöst. 0,71 g Ammoniumpolyacrylat werden erst nach der Dispergierung der Pulver hinzugefügt. Die so präparierte Suspension ist für 52 h stabil.

### Beispiel 2

Eine gemäß Beispiel 1 hergestellte Suspension wird unter starkem Rühren schnell in eine Lösung, bestehend aus 7,6 g Polyvinylalkohol als Bindemittel und 98,7 g H₂O gegeben. Der erhaltene Schlicker wird über eine Dauer von 35 min in einem Ultraschallbad bei einer Frequenz von 20 kHz behandelt. Die mittlere Partikelgröße unmittelbar nach der Herstellung wird zu 197 nm bestimmt. Nach einer Dauer von 20 min wird der Schlicker instabil und Reagglomeration setzt ein.

### Beispiel 2.1

Ein gemäß Beispiel 2 hergestellter Schlicker wird während der Herstellung und anschließend auf eine Temperatur von 15 °C gekühlt. Die Reagglomeration setzt nach 160 min ein.

### Beispiel 2.2

Mit einem gemäß Beispiel 2 hergestellten Schlicker wird wie gemäß Beispiel 1.3 verfahren. Nach Zugabe von Ammoniumpolyacrylat nimmt die mittlere Partikelgröße auf 202 nm ab. Der Schlicker ist anschließend für 7,5 h stabil.

### Beispiel 2.3

Ein Schlicker gemäß Beispiel 2 wird aus gemäß Beispiel 1.4 vorgelaugtem und gewaschenem Bariumtitanat hergestellt. Der Schlicker wird erst nach 6,5 h instabil.

### Beispiel 2.4

Wie in Beispiel 2 beschrieben, wird ein Schlicker präpariert. Für die Dispergierung des Pulvers wird jedoch nicht reines H₂O, sondern eine Lösung aus 79,2 g H₂O und 0,365 g Ammoniumoxalat-Monohydrat (NH₄ )₂C₂O₄·H₂O verwendet. Der so hergestellte Schlicker ist für 21 h stabil.

### Beispiel 2.5

Ein gemäß Beispiel 2.4 hergestellter Schlicker wird zusätzlich während der Präparation und anschließend auf eine Temperatur von 15 °C gekühlt und während der gesamten Zeit einer CO₂-freien N₂-Atmosphäre ausgesetzt. Der Schlicker ist 53 h stabil.

Die nachfolgende Tabelle faßt die in den Beispielen be-schriebenen Wirkungen der einzelnen Stabilisierungsmaßnahmen auf unterschiedlich vorbehandelte Suspensionen und Schlicker zusammen.

**Tabelle**

| Zeitdauer bis zum Einsetzen der Reagglomeration für auf verschiedene Weise behandelte Suspensionen (ohne Polyvinylalkohol) und Schlicker (mit Polyvinylalkohol) | | |
|---|---|---|
| **Behandlung** | **Suspension** | **Schlicker** |
| keine | 70 min | 20 min |
| Kühlung 10°C | 235 min | 160 min |
| CO₂-Ausschluß | 49 h | 70 min |
| Nachdosierung von Dispergiermitteln | 8 h | 7,5 h |
| Vorlaugung und Waschen | 6 h | 6,5 h |
| Oxalat-Zusatz | 52h | 21 h |
| Kühlung + CO₂-Ausschluß + Oxalat-Zusatz | 73 h | 53 h |

## Patentansprüche

1. Verfahren zur Herstellung von wässerigen Suspensionen, die feinteilige pulverförmige keramische Feststoffpartikel, Dispergierhilfsmittel und gegebenenfalls Bindemittel enthalten,
**dadurch gekennzeichnet**, daß bei der Herstellung der Suspensionen folgende Verfahrensschritte einzeln oder in Kombination durchgeführt werden:
- Waschen der Feststoffpartikel in Wasser vor Aufbereitung der Suspension;
- Zusatz von anionischen Verbindungen, insbesondere in Form von Sulfaten, Carbonaten, Jodaten, Chromaten, Oxalaten,
Citraten und/oder Tartraten;
- Herstellung der Suspensionen und/oder Lagerung der fertigen Suspensionen unter einer CO₂-freien Gasatmoshäre;- Herstellung der Suspensionen und Lagerung der fertigen Suspensionen bei einer Temperatur unterhalb 20 °C, vorzugsweise unterhalb 15 °C;
- Zusetzen von zusätzlichem Dispergierhilfsmittel zur Suspension zu einem Zeitpunkt, bei dem Reagglomeration der Feststoffpartikel in der Suspension gerade noch nicht oder gerade eingesetzt hat.

2. Verfahren nach Anspruch 1,
**dadurch gekennzeichnet**, daß als Feststoffpartikel Bariumtitanat einer mittleren Teilchengröße von < 0,5 µm, vorzugsweise im Bereich von 0,1 bis 0,2 µm, eingesetzt wird.

3. Verfahren nach den Ansprüchen 1 und 2,
**dadurch gekennzeichnet**, daß als Dispergierhilfsmittel Polyelektrolyte, insbesondere mit einem Polymerisationsgrad im Bereich von 20 bis 100, eingesetzt werden.

4. Verfahren nach Anspruch 3,
**dadurch gekennzeichnet**, daß das Dispergierhilfsmittel in einer Menge von 0,3 bis 2,5 mg Polyelektrolyt/m² Oberfläche der eingesetzten Feststoffpartikel zugesetzt wird.

5. Verfahren nach Anspruch 4,
**dadurch gekennzeichnet**, daß als Dispergierhilfsmittel Polyacrylate, insbesondere Ammoniumpolyacrylat, eingesetzt werden.

6. Verfahren nach mindestens einem der Ansprüche 1 bis 5,
**dadurch gekennzeichnet**, daß als Bindemittel Polyvinylalkohol eingesetzt wird.

7. Verfahren nach mindestens einem der Ansprüche 1 bis 6,
**dadurch gekennzeichnet**, daß die Suspensionen unter Edelgas-, vorzugsweise Argon-, oder Stickstoff-Atmosphäre hergestellt und/oder gelagert werden.

8. Verfahren nach mindestens einem der Ansprüche 1 bis 7,
**dadurch gekennzeichnet**, daß nach Fertigstellung der Suspension zu einem Zeitpunkt, wo Reagglomeration der Feststoffpartikel in der Suspension gerade noch nicht oder gerade eingesetzt hat, zusätzlich Dispergierhilfsmittel in einer Menge vom 0,5- bis 2-Fachen der beim Herstellen der Suspension eingesetzten Menge von Dispergierhilfsmittel zugesetzt wird.

9. Verfahren nach mindestens einem der Ansprüche 1 bis 8,
**dadurch gekennzeichnet**, daß die anionische(n) Verbindung(en) in Form ihrer Ammoniumsalze eingesetzt wird (werden).

10. Verfahren nach Anspruch 9,
**dadurch gekennzeichnet**, daß die anionische(n) Verbindung(en) zugesetzt wird (werden), bevor das Dispergierhilfsmittel zugesetzt wird.

11. Verfahren nach den Ansprüchen 9 und 10,
**dadurch gekennzeichnet**, daß die anionische(n) Verbindung(en) in einer Menge von 0,1 bis 1,5 Mol%, bezogen auf die Menge der Feststoffpartikel in der Suspension, zugesetzt wird (werden).

12. Verfahren nach mindestens einem der Ansprüche 1 bis 11,
**dadurch gekennzeichnet**, daß die Suspension nach Zusatz des Dispergierhilfsmittels und vor Zusatz des Bindemittels einer Ultraschall-Behandlungim Frequenzbereich von 5 kHz bis 1 MHz unterzogen wird.

13. Verfahren nach Anspruch 12,
**dadurch gekennzeichnet**, daß die Suspension nach Zusatz des Bindemittels einer erneuten Ultraschallbehandlung im Frequenzbereich von 5 kHz bis 1 MHz unterzogen wird.

14. Verwendung einer nach den Ansprüchen 1 bis 13 hergestellten Suspension für die Herstellung von dünnen keramischen Folien mit Dicken ≦ 25 µm.

15. Verwendung der dünnen keramischen Folien gemäß Anspruch 14 zur Herstellung von keramischen Vielschichtkondensatoren.
